Europäisches Patentamt

European Patent Office

Office européen des brevets

(19)

(11) Publication number: 0 136 913
A2

# (12) EUROPEAN PATENT APPLICATION

(21) Application number: 84306726.5

(22) Date of filing: 03.10.84

(51) Int. Cl.⁴: G 02 B 6/44

(30) Priority: 05.10.83 US 539344

(43) Date of publication of application:
10.04.85 Bulletin 85/15

(84) Designated Contracting States:
AT BE CH DE FR GB LI

(71) Applicant: International Standard Electric Corporation
320 Park Avenue
New York New York 10022(US)

(72) Inventor: Blanco Vazquez, Carlos
c/o Standard Electrica SA Jose Ortega y Gasset
22-24 Madrid 6(ES)

(72) Inventor: Asam, Adolf Richard
P.O. Box 215
Daleville Virgina(US)

(72) Inventor: Smith, John Carswell
1639 Lonna Drive
Roanoke Virginia(US)

(74) Representative: Vaufrouard, John Charles
ITT Patent Department UK Maidstone Road Foots Cray
Sidcup KentDA14 5HT(GB)

(54) Optical fibre cable.

(57) An optical fibre cable employs a central strength member fabricated from a dielectric material which member is surrounded by a plurality of peripheral tubes each having a hollow loosely containing an optical fibre. The tubes (such as 11) are fabricated from a plastics member having embedded therein glass fibres (20) to offer additional strength to the tubes and thus to permit a substantial reduction in the cross-section of the central support member which now serves in conjunction with the tubes to provide strength to the overall cable.

*Fig.2.*

20 GLASS FIBERS

EP 0 136 913 A2

## OPTICAL FIBRE CABLE

The present invention relates to optical fibre cables and more particularly to an improved optical fibre cable employing loose tubes for carrying the fibres.

Optical fibre transmissions have the advantage, among many other ones of their immunity to electrical interferences as the information being transmitted is in the form of light pulses.  As an optical fibre is composed entirely of dielectric materials it is not affected by electric signals or corrosion as most of the metallic conductor materials are.

Optical fibres are packed together and protected by a jacket to form an optical cable. Depending on the type of application, the requirements on the cable construction can be different.  In some cases no special dielectric or non-corrosive requirements have to be fulfilled, and the cable can include metallic components such as strength members or moisture-resistant barriers.  In other applications, however, specific requirements will necessitate an all dielectric cable.  Such a cable does not attract lightning.

An essential component of optical cables is the strength member which provides most of the tension that it is necessary to apply to the cable during

- 2 -

installation work or during cable operation.

Very few materials have been found, among the dielectric ones, with enough tensile strength and low elongation to qualify them as strength members to be used in optical cables. For this reason, the price of these few products is very high.

On the other hand, when the size and weight of the cable are relatively large, the diameter of the strength member required is so great that the flexibility of the final cable is seriously impaired.

These advantages have been found particularly crucial when designing fully dielectric loose tube cables, as will be further explained.

Some of these problems have been known in the past and there are many patents and articles directed to the protection and use of fibres in cable structures. See, for example, U.S. Patent 4,038,489 issued on July 26, 1977 to D.W.Stenson, et al. and entitled CABLES. This patent specification shows a cable for dielectric optical waveguides or fibres, the fibres being arranged in segmented compartments. Tensile members are provided in the core of the cable and/or externally of the segmented compartments. Another patent is U.S. 3,865,466 entitled OPTICAL GUIDES issued on February 11, 1975 to R.J. Slaughter which depicts a cable having an elongated central core consisting of at least one non-optical reinforcing member, a plurality of optical bundles arranged together in at least one stranded layer about the core and, surrounding the stranded body, an outer protective sheath. Other patents U.S. 4,072,398 and U.S. 4,199,244 depict various cable formats for protecting the optical fibres in a cable construction.

- 3 -

In any event, in constructing a cable employing fibre optics there is a desire to provide the cable with proper supporting structures and to eliminate completely any metal or electrically-conducting components. In this way the cable is completely dielectric. Thus a growing number of users of fibre optic cables want to retain the dielectric characteristics of the optical fibres and exclude the use of metallic members such as steel strength members.

Hence many cable manufacturers fabricate such cables using Kevlar, Epoxy or Polyester impregnated Kevlar rods and Epoxy or Polyester impregnated "S" or "E" glass rods. These materials are relatively expensive and difficult to obtain.

It is of course a major factor in the production of such cables to keep the cost down while not departing from the electrical and mechanical properties of the product. Thus if one can reduce the cost of the dielectric strength members, one can achieve a lower cost for the optical cable.

It is therefore an object of the present invention to provide an optical fibre cable capable of being produced at a lower cost while maintaining proper strength and operating characteristics.

According to the invention in its broadest aspect, there is provided a dielectric loose tube optical fibre cable having a tubular outer covering and containing a central strength member of a dielectric material, with a plurality of peripheral hollow fibre-containing tubes surrounding the central member and positioned between the central member and the outer covering, the hollow fibre-containing tubes being fabricated from a plastics material having embedded therein a plurality of glass fibres substantially oriented in the longitudinal direction along the tube, whereby the tubes contribute to the strength of the cable and allow a reduction in the cross sectional area of the central strength member.

According to another aspect of the invention, there is provided an optical fibre cable, comprising a longitudinal tubular cover member, a central strength member positioned centrally within the hollow of the cover member and fabricated from a dielectric material, a plurality of plastic fibre-accommodating longitudinal tubular members surrounding the central member and each positioned between the central member and the outer member, each of the tubular members containing at least one optical fibre within the hollow thereof and each being fabricated from a plastics material having embedded therein a plurality of glass fibres oriented longitudinally along the tubular member and of a substantially smaller length than any of the tubular members whereby each of the tubular members provides additional support to the cable, thus enabling a reduction in the cross section of the central strength member.

An embodiment of the invention will now be described by way of example with reference to the accompanying drawings, in which:

Figure 1 is a cross-sectional view of a loose tube fibre cable of the kind to which the invention relates, and

Figure 2 is a sectional view of a supporting tube showing the embedded glass fibres according to the invention.

- 5 -

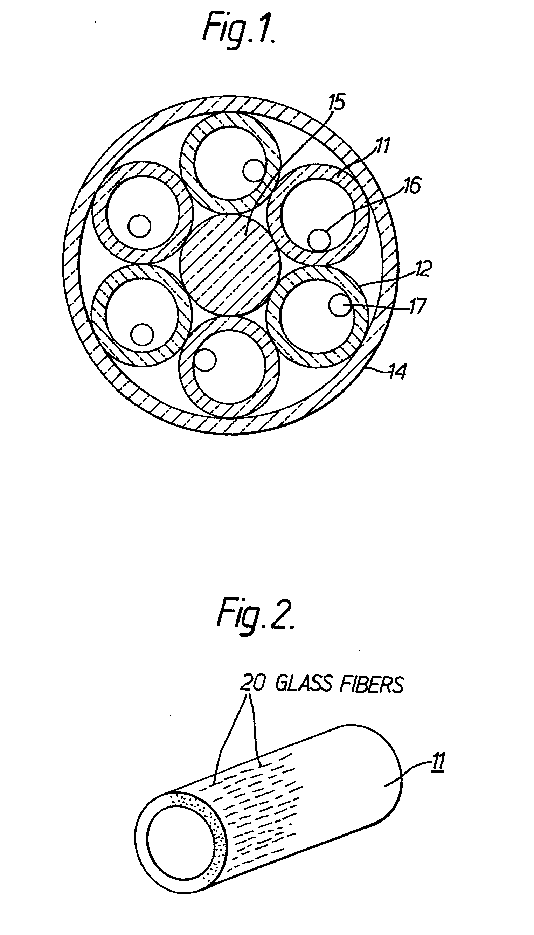

Referring to Figure 1, a loose tube cable is shown. In this cable, a plurality of tubes such as 11, 12 are disposed within a hollow longitudinal cable sheath or jacket 14 and abut against a central strength or supporting member 15. Each tube such as 11 or 12 loosely accommodates an optical fibre 16 and 17 respectively. Hitherto, the central strength member 15 has been an expoxy-impregnated glass member which is used to preserve the dielectric character of the cable. The outer tubes such as 11 and 12 have normally been fabricated from a plastics material. The epoxy-impregnated glass is expensive and substantially increases the cost of the cable. As indicated above, when the presence of a metal is not objectionable the central member 15 was fabricated from a stainless steel or other metal which is not, of course, suitable for full dielectric cables. Hence the strength member 15 in dielectric cables was fabricated from epoxy-impregnated glass fibre structures or from aramid fibres such as those sold under the trademark Kevlar. These materials are also expensive and difficult to obtain. The fibre-containing tubes as 11 and 12 were normally plastics tubes since the entire support and strength for the cable was designed to be provided by the strength member 15.

In fibre optic cable designs, it is a common practice to ascribe the whole tension required to the strength member 15 and to dimension this component without regard to the contribution to the cable strength of the rest of the elements of the cable. The remaining elements are only taken into consideration as contributors to the total cable weight.

The basic concept which embodies this invention is two-fold.

Primarily it is assumed that other cable components such as tubes 11 and 12, apart from the strength member 15 can also cooperate to provide the required cable tension.

Secondly, those tubes as 11, 12 are made of a material with a higher tensile modulus and substantially equal flexural modulus as compared with the material they replace.

The contribution to the tensile strength of a material is a function of the product of the cross area and the modulus of that material.

In order to take full advantage of the above, a material of relatively large cross section must be selected. In the loose tube cable, the largest cross sectional area corresponds to the coating of the strength member and consequently it has been chosen as the element intended to contribute to the cable tension. The loose tubes 11, 12 themselves can also be considered as elements that can contribute to the cable design.

These tubes 11 and 12 as will be explained are fabricated from a material selected to have a tensile modulus ten times greater than the high density polyethylene from which such tubes were formerly made. This material will be called reinforced plastics.

The tubes 11 and 12 are fabricated from a polymer in which there are embedded short lengths of glass fibre (about 1/2 centimeter). The volume percentage of glass fibre in each tube is up to 30% and preferably between 25 to 30%.

The tubes 11 and 12 are extruded with the glass fibres and, as the extrusion process continues, the short glass fibres interspersed in the plastics material in a random orientation became reoriented so as to extend substantially in the longitudinal direction of the loose tube element. Referring to Figure 2, there is shown a pictorial representation of a tube such as 11 with the glass fibres such as 20 aligned in the longitudinal direction. In practice, the extrusion process pushes the fibres into the plastics material so that they are not exposed at the surface of the tube.

The basic strength member remains the S-glass made of glass fibres impregnated in an epoxy resin.

The new cable is designed taking into account the added weight provided by the reinforced plastic (nearly twice as heavy as the polyethylene) and the composite strength of both the S-glass and the reinforced profile.

The new cable only requires an S-glass strength member 15 that has a diameter 3.8 times smaller than that required by a prior art cable of the same characteristics.

In consequence, the new cable overcomes the problems that were mentioned above.

The cost of the cable will be lowered as it uses significantly less quantity of the proportionately most expensive component. The flexibility of the whole cable will also be improved as the diameter of the S-glass has been dramatically reduced.

Thus the new cable construction offers a significant reduction in the size of the central supporting member 15 resulting in cost reduction of the cable without impairment of the cable strength. The central supporting member which is now of a smaller diameter could be, as indicated, fabricated from an epoxy-impregnated "S" glass or a glass-reinforced plastic. The tubes such as 11 and 12 which loosely hold the optical fibres are fabricated from an extruded polyethylene plastics material having embedded therein glass fibres to enable the tubes to provide additional cable support as described above.

- 9 -

CLAIMS:

1. A dielectric loose tube optical fibre cable having a tubular outer covering and containing a central strength member of a dielectric material, with a plurality of peripheral hollow fibre-containing tubes surrounding the central member and positioned between the central member and the outer covering, the hollow fibre-containing tubes being fabricated from a plastics material having embedded therein a plurality of glass fibres substantially oriented in the longitudinal direction along the tube, whereby the tubes contribute to the strength of the cable and allow a reduction in the cross sectional area of the central strength member.

2. The optical fibre cable according to claim 1 wherein the plastics tube is made of extruded polyethylene.

3. The optical fibre cable according to claim 2, wherein the glass fibres are approximately 0.5 centimeter in length.

4. The optical fibre cable according to claim 1 wherein the fibres comprise between 25 - 30 percent of the material volume of the tubes.

5. The optical fibre cable according to claim 1 wherein the glass fibres are pushed into the plastics tube material so they are substantially absent from the surface of the tubes.

6. The optical fibre cable according to claim 1 wherein the strength member is fabricated from an epoxy-impregnated glass.

7. The optical fibre cable according to claim 1 wherein the strength member is fabricated from a glass-reinforced plastics material.

8. The optical fibre cable according to claim 7 wherein the plastics material is polyethylene.

9. An optical fibre cable, comprising a longitudinal tubular cover member, a central strength member positioned centrally within the hollow of the cover member and fabricated from a dielectric material, a plurality of plastic fibre-accommodating longitudinal tubular members surrounding the central member and each positioned between the central member and the outer member, each of the tubular members containing at least one optical fibre within the hollow thereof and each being fabricated from a plastics material having embedded therein a plurality of glass fibres oriented longitudinally along the tubular member and of a substantially smaller length than any of the tubular members whereby each of the tubular members provides additional support to the cable, thus enabling a reduction in the cross section of the central strength member.

10. The optical fibre cable according to claim 9 wherein the plastics material is polyethylene.

11. The optical fibre cable according to claim 9 wherein the glass fibres are approximately 0.5 centimeters in length.

12. The optical fibre cable according to claim 9 wherein the plastics tubular members are extruded with the glass fibres.

13. The optical fibre cable according to claim 9 wherein the central strength member is an epoxy-impregnated glass member.

14. The optical fibre cable according to claim 9 wherein the fibres comprise between 25 - 30 percent of the material volume of the tubular member.

15. The optical fibre cable according to claim 9 wherein the strength member is fabricated from a glass-reinforced plastics material.

16. The optical fibre cable according to claim 15 wherein the plastics material is polyethylene.

- 11 -

17. The optical fibre cable according to claim 9 wherein the glass fibres are  pushed into the tubular members so that they are substantially absent from the surface.

18. An optical fibre cable substantially as described with reference to the accompanying drawings.

Fig.1.

Fig.2.

20 GLASS FIBERS